# EUROPEAN PATENT APPLICATION

(11) **EP 4 439 074 A1**
(43) Date of publication of application: **02.10.2024**
(21) Application number: 22898371.4
(22) Date of filing: 02.11.2022
(51) Int. Cl.: G01N 35/10

(54) **AUTOMATIC ANALYSIS DEVICE**

(30) Priority: 26.11.2021 JP 2021191989
(71) Applicant: HITACHI HIGH-TECH CORPORATION, Tokyo 105-6409 (JP)
(72) Inventor: CHUMAN, Takeru, Tokyo 105-6409 (JP); TAKADA, Eiichiro, Tokyo 105-6409 (JP)
(74) Representative: MERH-IP Matias Erny Reichl Hoffmann Patentanwälte PartG mbB
(86) International application number: PCT/JP2022/041064
(87) International publication number: WO 2023/095587

(57) **Abstract**

An object of the invention is to provide a low-cost automatic analyzer without reducing a throughput. A cleaning tank is arranged-such that a detection timing for a dispensing tip occurs when the dispensing tip moves to the cleaning tank, and a sensor that monitors the cleaning tank is arranged. By performing an operation of returning to the cleaning tank after an operation in a sample discharge area, the dispensing tip can be detected at all timings at which the dispensing tip needs to be confirmed during normal analysis by one sensor that monitors the cleaning tank.

## Description

### TECHNICAL FIELD

The present invention relates to an automatic analyzer.

### BACKGROUND ART

In recent years, an automatic analyzer has been required to provide higher throughput and highly accurate analysis results. In addition, there is also a growing need for downsizing the automatic analyzer due to higher integration of the automatic analyzer. To achieve high throughput, it is necessary to shorten the time required for analysis and reduce the operating time of the automatic analyzer.

An automatic analyzer is known, which is configured to dispense a sample and a reagent using a disposable dispensing tip for the purpose of preventing contamination of the reagent and the sample to achieve accurate analysis. A disposable dispensing tip is attached to a dispensing mechanism each time the dispensing mechanism performs a dispensing operation. After the dispensing operation ends, the dispensing tip is removed for discarding of the tip and is discarded. Since a dispensing tip is removed and another dispensing tip is attached for each dispensing operation, there is a concern that the dispensing tips may fail to be attached and removed and that the dispensing tip may fall off during the dispensing operation.

Therefore, Patent Literature 1 has proposed an automatic analyzer having a configuration for checking whether a dispensing tip is attached to a dispensing mechanism during an analysis operation. Patent Literature 1 discloses a configuration in which a dispensing tip is attached to a dispensing mechanism and a sensor that monitors an operating trajectory of the dispensing mechanism detects whether the dispensing tip is attached during the analysis operation.

### Citation List

### Patent Literature

Patent Literature 1: International Publication No. WO2019/146220

### Summary of Invention

### Technical Problem

An automatic analyzer is required to be downsized through high integration of the device, as well as to improve analytical performance and throughput. As a method for achieving downsizing, a sample/reagent dispensing mechanism in which a sample dispensing mechanism and a reagent dispensing mechanism are integrated with each other has been devised and its application is progressing. However, in Patent Literature 1, in a case where the sample/reagent dispensing mechanism in which the sample dispensing mechanism and the reagent dispensing mechanism are integrated with each other is used, the arrangement of the mechanism and a method for detecting a dispensing tip are not considered, and an increase in cost and a reduction in throughput due to an additional sensor and an extra operation are issues.

An object of the present invention is to provide a low-cost automatic analyzer without a reduction in throughput.

### Solution to Problem

A single sensor is arranged to monitor a movement trajectory of a dispensing mechanism in order to determine whether a disposable dispensing tip used in an automatic analyzer is correctly attached during an analysis operation. The sensor is arranged in a region in which an end point of a sample/reagent aspiration operation in the dispensing operation overlaps a start point of an operation of discharging an aspirated liquid. The single sensor can detect whether the dispensing tip is attached to a dispensing nozzle when the dispensing mechanism operates to be moved to the start point of the discharge operation after the discharge operation.

### Advantageous Effects of Invention

According to the present invention, a low-cost automatic analyzer can be configured without a reduction in throughput.

### BRIEF DESCRIPTION OF THE DRAWINGS

[FIG. 1] FIG. 1 is an overall schematic diagram of an automatic analyzer according to a first embodiment.
[FIG. 2] FIG. 2 is a diagram showing a positional relationship between a movement path of a sample/reagent dispensing mechanism and other components in the automatic analyzer according to the first embodiment.
[FIG. 3] FIG. 3 is a flowchart showing an operation of the sample/reagent dispensing mechanism in an analysis operation of the automatic analyzer according to the first embodiment.
[FIG. 4] FIG. 4 is a diagram showing a positional relationship between a sensor for detecting a dispensing tip and the sample/reagent dispensing mechanism in the automatic analyzer according to the first embodiment.
[FIG. 5] FIG. 5 is a diagram showing a positional relationship between the sensor for detecting the dispensing tip and a cleaning tank in the automatic analyzer according to the first embodiment.

### DESCRIPTION OF EMBODIMENTS

Hereinafter, embodiments of an automatic analyzer for carrying out the present invention will be described in accordance with the drawings.

### First Embodiment

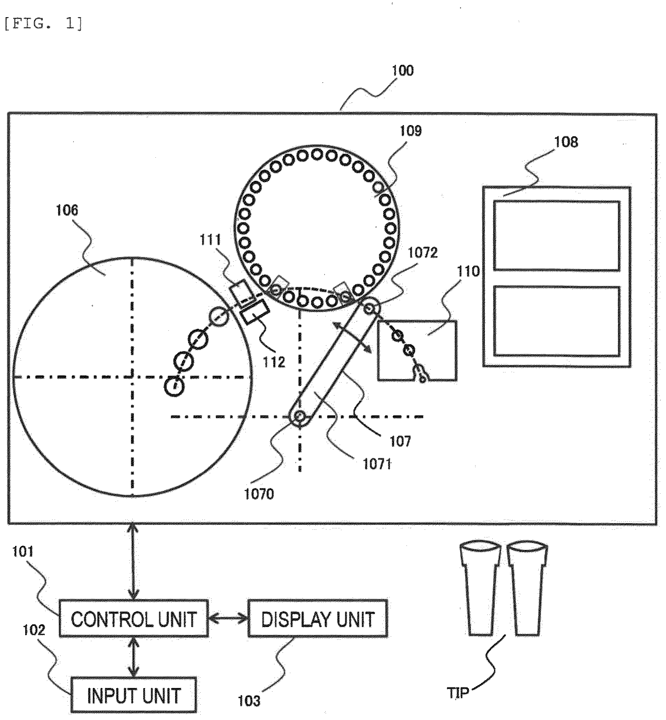

FIG. 1 is an overall schematic diagram of an automatic analyzer 100 according to a first embodiment. The automatic analyzer 100 includes a control unit 1, an input unit 102, and a display unit 103. The control unit 101 is a computer that controls an entire operation of the automatic analyzer 100 including a sample/reagent dispensing mechanism 107 described later. The input unit 102 is an input device for inputting various main operation commands, various data, and the like and is, for example, a keyboard and a mouse.

A sample/reagent container rack 106 that is a first container holding unit, the sample/dispensing mechanism 107, and an incubator 109 that is a second container holding unit are configured to be able to hold a dispensing tip (TIP) and aspirate a sample or a reagent from the sample/reagent holding unit rack 106, and discharge an aspirated liquid into a reaction vessel RC placed on the incubator 109 by a conveyance mechanism (not illustrated).

The automatic analyzer 100 further includes a tip attachment/discarding unit 110 that is at a discarding position, and a sensor 112 that is a detection unit. The sensor 112 is a detector for detecting whether the dispensing tip is attached to a dispensing nozzle 1070 of the sample/reagent dispensing mechanism 107 and whether the dispensing tip is.removed from the dispensing nozzle 1070, as described later. Although the method of the sensor 112 is not limited, the detection principle and the like are not critical as long as the sensor 112 can detect the presence of the dispensing tip. Preferably, the sensor 112 includes a light emitting unit 112-1 that generates light, and a light receiving unit 112-2 that receives reflected and scattered light.

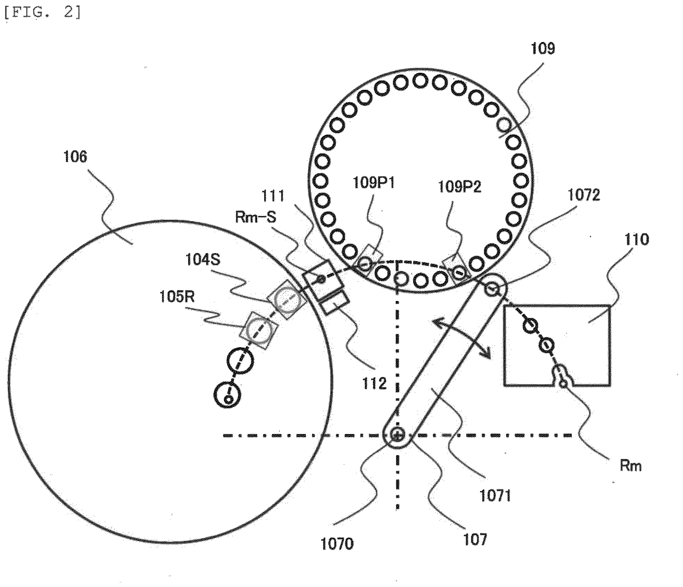

The sample/reagent dispensing mechanism 107 includes an arm 1071 that is rotatable around a rotary shaft 1070, and the dispensing nozzle 1072 attached to the arm 1071 and serving as a probe. The sample/reagent dispensing mechanism 107 is configured such that the dispensing nozzle 1072 can be moved on an arc-shaped movement path Rm by the rotation of the arm 1071. Aspiration units 104S/105R, the detection unit 112S constituted by the sensor 112, discharge units 109P1/109P2, and the tip attachment/discarding unit 110 are arranged and configured as illustrated in FIG. 2.

In addition to the above description, the sample/reagent dispensing mechanism 107 dispenses a sample and a reagent using a single dispensing tip as described later. In this case, a cleaning tank 111 is installed on the movement path Rm as a mechanism that cleans the dispensing tip to prevent contamination before and after the operation of aspirating the sample and the reagent.

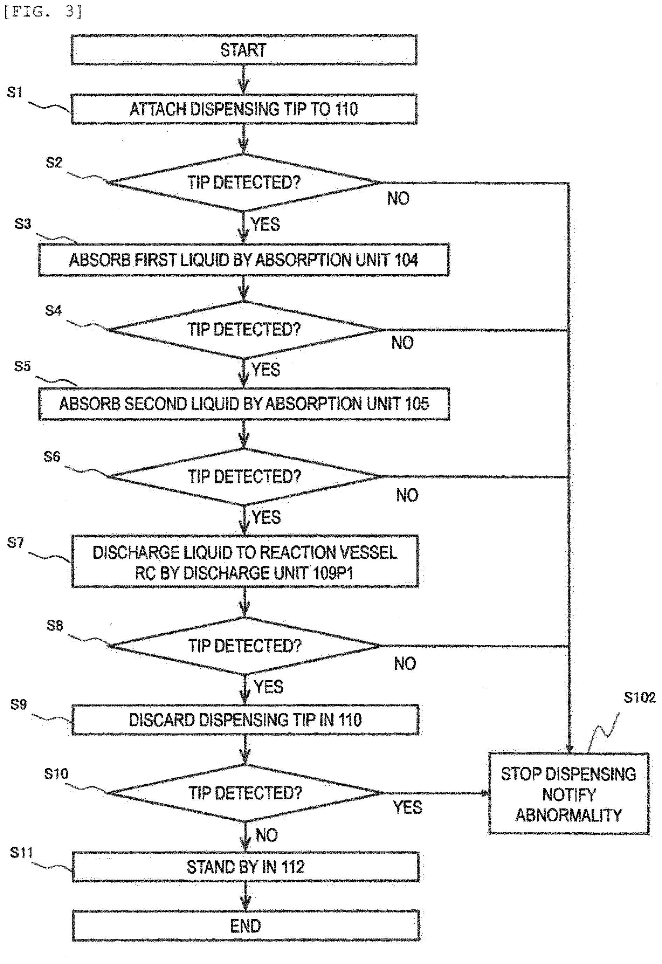

FIG. 3 illustrates a first example of the dispensing operation of the sample/reagent dispensing mechanism 107. As illustrated in the drawing, as an example of the dispensing operation of the sample/reagent dispensing mechanism 107, the attachment of the dispensing tip by the tip attachment/discarding unit 110 (S1),aspiration of a first liquid at the sample/reagent rack aspiration unit 105R (S3),aspiration of a second liquid at the sample/reagent rack aspiration unit 104S (S5),discharge of the aspirated liquids at the discharge units 109P1/2 (S7),movement to the detection unit 112S (S8), and discarding of the dispensing tip by the tip attachment/discarding unit 110 (S9) are performed in this order.

The tip detection unit 112S constituted by the sensor 112 illustrated in FIG. 2 is arranged so as to be aligned with an end point Rm-S of a reciprocating movement in the operation of steps S1, S3, and S5 corresponding to the dispensing aspiration operation of the sample/dispensing mechanism 107. The operation S7 is performed such that a start point of the dispensing discharge operation S7 of the sample/dispensing mechanism 107 is Rm-S. By adding the operation of S8, the sensor 112 detects whether a dispensing tip attached to the dispensing nozzle 1072 is present in the operations of S1, S3, S5, and S7, respectively. When the sensor 112 is arranged as described above and the operation S8 is performed, the single sensor 112 can detect the dispensing tip.

The end point Rm-S of the reciprocating movement in the dispensing aspiration operation S100 may be at any position on the movement path Rm-S. However, as illustrated in FIG. 2, it is optimal to locate the end point Rm-S between the sample/reagent rack 106 and the incubator 109. When the end point Rm-S is at the position illustrated in FIG. 2, the operation of the sample/dispensing mechanism 107 can be divided into an operation on the movement path Rm on the sample/reagent rack 106 side with respect to Rm-S and an operation on the movement path Rm on the incubator 109 side with respect to Rm-S, and the sample/reagent aspiration operation and the sample/reagent discharge operation can be performed over the shortest distance.

The sample/reagent dispensing operation that is performed in the automatic analyzer illustrated in FIG. 2 in accordance with a flowchart illustrated in FIG. 3 will be described in detail.

When a command to dispense a sample/reagent is input' to the control unit 101 via the input unit 102, the dispensing nozzle 1072 attached to the sample/reagent dispensing mechanism 107 is moved from an initial position to the tip attachment/discarding unit 110 along the movement path Rm according to a control signal from the control unit 101, and a dispensing tip is attached to the dispensing nozzle 1072. (S1)

After that, the dispensing nozzle 1072 is moved in the opposite direction (arrow X) on the movement path Rm, passes through the discharge units 109P1/2, reaches the aspiration unit 105R, and aspirates the first liquid from a sample reagent container 104. (S2)

In the transition from S1 to S3, when the nozzle 1072 passes through the detection unit 112S constituted by the sensor 112, the.sensor 112 detects whether the dispensing tip is attached to a distal end of the dispensing nozzle 1072. In a case where the attachment of the dispensing tip is detected, it is determined that the dispensing operation is normal, and the dispensing operation is continued. In a case where the dispensing tip is not detected, it is determined that an abnormality has occurred in the dispensing operation, that is, it is determined that the attachment of the dispensing tip has failed, the operation of the sample/reagent dispensing mechanism 107 is stopped, and an abnormality notification is displayed on the display unit 103. (S102)

After the sample/reagent dispensing mechanism 107 aspirates the first liquid at the aspiration unit 105R, the sample/reagent dispensing mechanism 107 returns in the opposite direction (direction indicated by the arrow) on the movement path Rm, reaches Rm-S that is the end point of the reciprocating movement in the operation S100. After that, the sample/reagent dispensing mechanism 107 is cleaned in the cleaning tank 111 installed on the movement path Rm. After the cleaning, the sample/reagent dispensing mechanism 107 is moved in the opposite direction (direction indicated by the arrow) again, reaches the aspiration unit 104S, and aspirates the second liquid from the sample reagent container 104. (S5)

Since the detection unit 112S is arranged so as to be aligned with Rm-S, the sensor 112 detects whether the dispensing tip is attached in the transition from S3 to S5. In a case where the attachment of the dispensing tip is detected, it is determined that the dispensing operation is normally performed, and the dispensing operation is continued. In a case where the dispensing tip is not detected, it is determined that an abnormality has occurred (falling of the dispensing tip) in the dispensing operation, the dispensing operation of the sample/reagent dispensing mechanism 107 is stopped, and an abnormality notification is displayed on the display unit 103. (S102)

After the sample/reagent dispensing mechanism 107 aspirates the second liquid at the aspiration unit 104S, the sample/reagent dispensing mechanism 107 returns in the opposite direction (direction indicated by the arrow) on the movement path Rm again, and is cleaned in the cleaning tank 111 installed on the end point Rm-S of the reciprocating movement, the movement path Rm. After the cleaning, the sample/reagent dispensing mechanism 107 passes through the detection unit 112S, reaches the liquid discharge unit 109P1 or 109P2, and discharges the aspirated liquid to the reaction vessel RS installed in the discharge unit. (S7)

In this case, in the transition from S5 to S7, the sensor 112 detects whether the dispensing tip is attached. In a case where the attachment of the dispensing tip is detected, it is determined that the dispensing operation is normally performed, and the dispensing operation is continued. In a case where the dispensing tip is not detected, it is determined that an abnormality has occurred in the dispensing operation, that is, it is determined that the dispensing tip has fallen, the operation of the sample/reagent dispensing mechanism 107 is stopped, and an abnormality notification is displayed on the display unit 103. (S102)

After the sample/dispensing mechanism 107 discharges a liquid at the liquid discharge unit 109P1 or 109P2, the sample/dispensing mechanism 107 returns in the opposite direction on the movement path Rm again, is moved to the end point Rm-S of the reciprocating movement, and performs tip detection. (Operation S8)

Since the detection unit 112S for the dispensing tip is arranged so as to be aligned with Rm-S, the sensor 112 detects whether the dispensing tip is attached in the transition from operation S7 to operation S8. In a case where the dispensing tip is not detected, it is determined that an abnormality has occurred (falling of the dispensing tip) in the dispensing operation, the dispensing operation of the sample/reagent dispensing mechanism 107 is stopped, and an abnormality notification is displayed on the display unit 103. (Operation S102)

The sample/reagent dispensing mechanism 107 reaches the end point Rm-S of the reciprocating movement by operation S8, and .checks whether the dispensing tip is attached. After that, the sample/reagent dispensing mechanism 107 moves on the movement path Rm in the opposite direction again, moves to the tip attachment/discarding unit 110, and performs a tip discarding process. (S9)

After the tip discarding is completed at the tip attachment/discarding unit 110, the sample/reagent dispensing mechanism 107 returns in the opposite direction on the movement path Rm again, moves to the end point Rm-S of the reciprocating movement, and stands by. Therefore, the end point Rm-S of the reciprocating movement functions as a standby unit. (S11)

In this case, in the transition from S9 to S11, the sensor 112 detects whether the dispensing tip is attached. In a case where the attachment of the dispensing tip is not detected, it is determined that the operation of discarding the dispensing tip has been normally completed, and the dispensing operation ends. In a case where the dispensing tip is detected, it is determined that an abnormality has occurred in the dispensing operation, that is, it is determined that the discarding of the dispensing tip has failed, the operation of the sample/reagent dispensing mechanism 107 is stopped, and an abnormality notification is displayed on the display unit 103. (S102)

The above-described cleaning tank 111 may be arranged at any position on the movement path Rm, it is optimal to arrange the cleaning tank 111 between the sample/reagent rack 106 and the incubator 109 as illustrated in FIG. 2. In addition, by aligning the position of the cleaning tank 111 with the end point Rm-S of the reciprocating operation of the sample/reagent dispensing mechanism 107, the dispensing operation of the sample/reagent dispensing mechanism 107 can be performed within the shortest time.

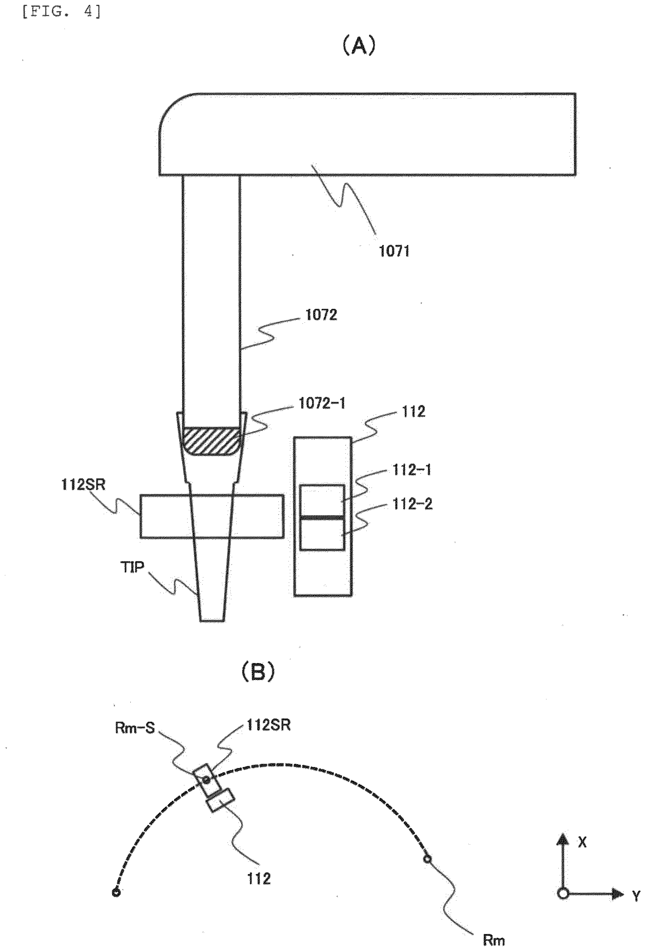

FIG. 4 illustrates a mutual positional relationship between the sample/reagent dispensing mechanism 107 and the sensor 112. FIG. 4 illustrates, an example in a case where a light reflection sensor is used, and the sensor that detects the dispensing tip may be arranged to satisfy the following two conditions.

The dispensing tip is attached to the distal end of the dispensing nozzle 1072, and the sensor detection unit emits a detection signal when the dispensing nozzle 1072 is positioned at the sensor detection unit.

The sensor detection unit does not emit a detection signal when the dispensing tip is not attached to the distal end of the dispensing nozzle 1072 and the dispensing nozzle 1072 is positioned at the sensor detection unit.

A positional relationship of the sensor in a case where the light reflection sensor illustrated in FIG. 4 is used is described in detail. Since the above-described two conditions are satisfied by the light reflection sensor, the light reflection sensor is specifically arranged to satisfy the following conditions.

A detection range 112SR of the sensor is located on the movement path Rm-S.

While the detection range 112SR of the sensor is at a height position where the sample/reagent dispensing mechanism 107 moves on the movement path Rm, the following conditions are satisfied.

The detection range 112SR of the sensor does not overlap a distal end portion 1072-1 of the dispensing nozzle 1072.

When the dispensing nozzle 1072 is attached to the dispensing tip, the detection range 112SR of the sensor overlaps the dispensing tip.

The detection range 112SR of the sensor does not overlap any mechanism other than the dispensing tip.
In addition, the sensor 112 is configured to be able to transmit, to the control unit 101, a detection state of the sensor 112 when the control unit 101 transmits a control signal to check a sensor state.

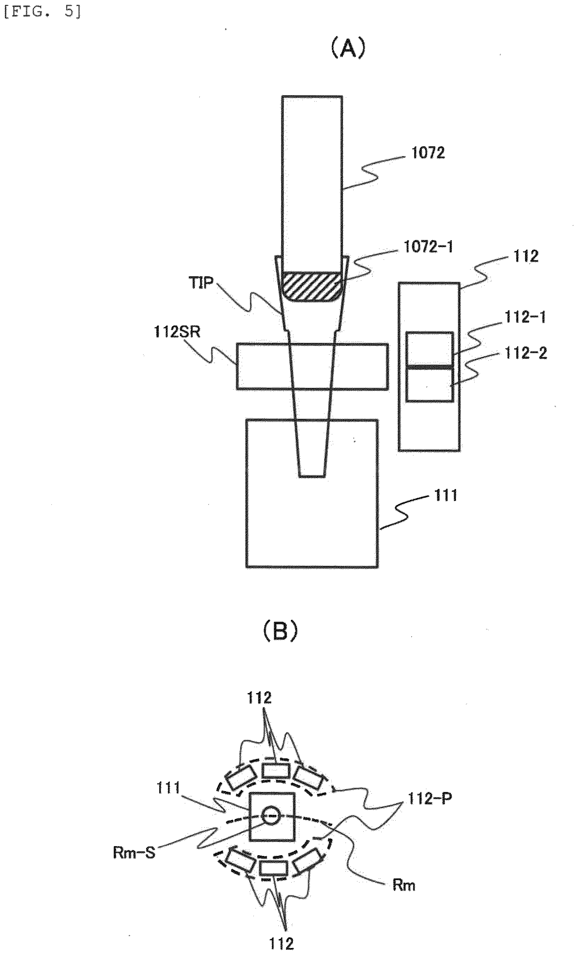

FIG. 5 illustrates a positional relationship between the cleaning tank 111 and the sensor 112. As described above, the dispensing operation can be performed over the shortest distance by aligning the end point Rm-S of the reciprocating movement of the sample/reagent dispensing mechanism 107 with the position of the cleaning tank 111. In this case, the detection unit 112S constituted by the sensor 112 is aligned with the end point Rm-S of the reciprocating movement. Therefore, the positional relationship between the sensor 112 and the cleaning tank 111 satisfies the following conditions.

The detection range 112SR of the sensor 112 is located at an upper position in the height direction such that the range 112SR does not overlap the cleaning tank 111.

The sensor 112 does not interfere with the movement path Rm.

The detection range 112SR of the sensor 112 does not interfere with a liquid and a mechanism used for cleaning in the cleaning tank 111.

The sensor 112 satisfies the conditions for the arrangement of the sensor.

As illustrated in FIG. 5(B), a region 112-P in which the sensor 112 can be arranged is a set of positions where the sensor 112 does not interfere with the movement path Rm and the detection unit 112S can be arranged so as to be aligned with the end point Rm-S of the reciprocating movement. However, the region 112-P illustrated in FIG. 5 is an example in a case where the light reflection sensor is used. In a case where the positional relationship between the sensor 112 to be used and the cleaning tank 111 satisfies the above-description conditions, for the arrangement of the sensor in performing the tip detection in the cleaning tank 111, the region in which the sensor can be arranged is 112-P.

As described above, in the device illustrated in FIG. 2, the tip attachment/discarding unit 110, the incubator 109, the sensor 112, the end point Rm-S of the reciprocating movement, and the sample/reagent rack 106 are arranged, and as a result, the sample/dispensing mechanism 107 can detect the dispensing tip by the sensor 112 by performing the operation of S8 in addition to the above-described steps S1, 3, 5, and 7. In addition, by aligning the position of the sensor 112 with the end point Rm-S of the reciprocating movement, the distance that the sample/reagent dispensing mechanism 107 moves can be shortest, and thus dispensing tips can be detected a plurality of times without a reduction in the throughput of the automatic analyzer. In a case where the sensor 112 cannot detect a dispensing tip even though the dispensing tip is attached to the dispensing nozzle 1072 when the sensor 112 passes, or in a case where the sensor 112 detects the attachment of the dispensing tip even though the dispensing tip is not attached to the dispensing nozzle 1072, it is determined that an abnormality has occurred, an abnormality occurrence notification is displayed on the display unit 103, and the sample dispensing operation can be stopped.

As described above, the automatic analyzer according to the present embodiment includes the incubator that accommodates a plurality of reaction vessels, the sample/reagent dispensing mechanism that dispenses a sample/reagent in each of the plurality of reaction vessels, an attachment unit that attaches a dispensing tip to the sample/reagent dispensing mechanism, the aspiration unit for aspirating the sample/reagent from the vessels containing the sample/reagent by using the sample/reagent dispensing mechanism to which the dispensing tip has been attached, the discharge unit that is provided in the incubator for discharge of the aspirated liquid from the sample/reagent dispensing mechanism to the reaction vessels, the discarding unit that discards the dispensing tip, the sensor that detects whether the dispensing tip is attached to the sample/reagent dispensing mechanism, and the control unit that controls the sample/reagent dispensing mechanism. The attachment unit, the aspiration unit, the discharge unit, and the discarding unit are arranged along the movement path of the sample/reagent dispensing mechanism. The sensor is arranged between the aspiration unit and the discharge unit. After the control unit discharges the liquid from the sample/reagent dispensing mechanism into the reaction vessels by using the discharge unit, the control unit controls the sample/reagent dispensing mechanism such that the sample/reagent dispensing mechanism returns to the sensor. Therefore, it is possible to provide the low-cost automatic analyzer without a reduction in the throughput.

### List of Reference Signs

100: automatic analyzer
101: control unit
102: input unit
103: display unit
106: sample/reagent rack
107: sample/reagent dispensing mechanism
1070: sample/reagent dispensing mechanism rotary shaft
1071: rotary arm
1072: dispensing nozzle
108: reaction vessel/dispensing tip accommodation unit
109: incubator
109P1: first discharge position
109P2 second discharge position
110: tip attachment/discarding unit
111: cleaning tank
112: sensor
112S: detection unit
112SR: sensor detection range
112-P: sensor arrangeable range

## Claims

1. An automatic analyzer comprising:
a probe having a tip attached to a distal end of the probe and configured to aspirate and discharge a liquid through the tip;
a first container holding unit configured to hold a plurality of containers each containing a liquid to be aspirated by the probe;
a second container holding unit configured to hold a plurality of containers each containing a liquid to be discharged by the probe;
a detection unit configured to detect whether the tip is attached to the distal end of the probe; and
a control unit configured to control a movement of the probe, wherein
the first container holding unit, the detection unit, and the second container holding unit are arranged in this order, and
the control unit performs control such that the probe aspirates the liquid on the first container holding unit, discharges the liquid on the second container holding unit via the detection unit, and then returns to the detection unit to detect the tip.

2. The automatic analyzer according to claim 1, further comprising:
a cleaning tank configured to clean the tip, the cleaning tank being provided between the first container holding unit and the second container holding unit.

3. The automatic analyzer according to claim 2, wherein
the detection unit is installed above the cleaning tank.

4. The automatic analyzer according to claim 2, further comprising:
a standby unit configured to cause the probe to stand by, wherein
the standby unit is positioned in the detection unit.

5. The automatic analyzer according to claim 1, wherein
the detection unit is capable of transmitting tip detection information in the detection unit to the control unit when a control command is issued from the control unit.

6. The automatic analyzer according to claim 1, further comprising:
a discarding position that is a position to discard the tip from the probe, wherein
the first container holding unit, the detection unit, the second container holding unit, and the discarding position are arranged in this order, and
the detection unit enables detection of the tip before discarding the tip at the discarding position.

7. The automatic analyzer according to claim 6, wherein
the detection unit includes a light source that emits light and a photodetector that detects the light.

8. The automatic analyzer according to claim 1, wherein
the probe is capable of aspirating the liquid to be aspirated, which is held by the first container holding unit, a plurality of times in a dispensing operation and discharging the liquid into the second container holding unit.

9. The automatic analyzer according to claim 8, wherein
the liquid to be aspirated is a sample and a reagent.
